# EUROPEAN PATENT SPECIFICATION

(11) **EP 4 410 759 B1**
(45) Date of publication and mention of the grant of the patent: **07.05.2025**
(21) Application number: 24184085.9
(22) Date of filing: 17.08.2022
(51) Int. Cl.: C04B 14/10

(54) **A MECHANOCHEMICALLY CARBONATED CLAY, METHODS OF ITS PRODUCTION AND USES THEREOF**
MECHANOCHEMISCH KOHLENSÄUREHALTIGER TON, VERFAHREN ZU SEINER HERSTELLUNG UND VERWENDUNGEN DAVON
ARGILE MÉCANOCHIMIQUEMENT CARBONATÉE, SES PROCÉDÉS DE PRODUCTION ET SES UTILISATIONS

(43) Date of publication of application: 07.08.2024
(62) Divisional of application: 22190795.9
(73) Proprietor: Carbon Upcycling Technologies Inc., Calgary, AB T2P 3N9 (CA)
(72) Inventor: Sinha, Apoorva, Calgary, T3S 0A2 (CA)
(74) Representative: Nederlandsch Octrooibureau

(56) References cited:
- VIZCAYNO C ET AL: "Pozzolan obtained by mechanochemical and thermal treatments of kaolin", APPLIED CLAY SCIENCE, ELSEVIER, AMSTERDAM, NL, vol. 49, no. 4, 1 August 2010 (2010-08-01), pages 405 - 413, XP027198140, ISSN: 0169-1317, [retrieved on 20091003]

## Description

### Field of the invention

The present invention relates a mechanochemically carbonated clay. The invention further relates to methods of its production and uses thereof. The invention further relates to compositions comprising the mechanochemically carbonated clay and a further material selected from the group consisting of asphalt, cement, geopolymers, polymers and combinations thereof. The invention further relates to concrete and methods of their preparation.

### Background art

Concrete is a composite material, comprising a matrix of aggregate (typically a rocky material) and a binder (typically Portland cement or asphalt), which holds the matrix together. Concrete is one of the most frequently used building materials and is said to be the second most widely used material on earth, after water.

In order to reduce the cost of concrete and the CO₂ emissions generated by global cement production, much research effort has been dedicated to identifying cheap material which can be used as a filler or alternative binder to replace the binder component without (detrimentally) affecting the properties of concrete. Such secondary cementitious materials are an area of broad industry interest.

An example of a widely employed cement filler is limestone. A comprehensive overview of fillers in cementitious materials can be found in John, Vanderley M., et al. "Fillers in cementitious materials-Experience, recent advances and future potential." Cement and Concrete Research 114 (2018): 65-78.

The production of Portland cement contributes to about 8% of world carbon dioxide emissions. According to Vanderley et al. the traditional mitigation strategies for CO₂ emissions in the cement industry are not sufficient to ensure the necessary mitigation in a scenario of increasing cement demand. Currently, cement production is increasing due to a combination of increasing urbanization and replacement of old infrastructure. Therefore, the adoption of expensive and environmentally risky carbon capture and storage (CCS) has been considered an unavoidable solution by cement industry leaders.

Hence, there remains a need to develop affordable filler technology which can combine both the CO₂ emission reduction achieved by reduced cement production and the CO₂ emission reduction achieved by carbon capture technology and which does not detrimentally affect the properties of concrete.

US 2012/0055376 A1 describes reduction of CO₂ emission of concrete by partly replacing cement with a supplementary cementitious material comprising a calcined clay and a ground carbonate material.

It is an object of the present invention to provide improved fillers for cement, geopolymer or asphalt binder.

It is a further object of the present invention to provide improved fillers for cement, geopolymer or asphalt binder which are cheap to produce.

It is a further object of the present invention to provide improved fillers for cement, geopolymer or asphalt binder which are produced using CO₂ capture technology.

It is a further object of the present invention to provide improved fillers for cement, geopolymer or asphalt binder which improve the properties of the resulting concrete, such as the compressive strength, the strength activity index and/or the water demand.

### Summary of the invention

In a first aspect the present invention provides a mechanochemically carbonated clay which has a specific surface area of less than 50 m²/g.

In another aspect, the invention provides a method for producing a mechanochemically carbonated clay, said method comprising the steps of:
a) providing a feedstock comprising or consisting of a clay precursor;
b) providing a gas comprising CO₂;
c) introducing said feedstock and said gas into a mechanical agitation unit; and
d) subjecting the material of said feedstock to a mechanical agitation operation in the presence of said gas in said mechanical agitation unit.

This method can be applied to various types of clay precursors, advantageously resulting in unique mechanochemically carbonated clay.

In another aspect, the invention provides a mechanochemically carbonated clay obtainable by the method for producing the mechanochemically carbonated clay described herein.

As will be shown in the appended examples, it was found that when such mechanochemically carbonated clays described herein are used as a filler in cement the compressive strength of the resulting concrete is surprisingly increased beyond the values obtained for non-carbonated clay and in particular well beyond the values of pure Portland cement. In particular, the set time for the strength development is strongly improved (shortened) compared to when non-mechanochemically carbonated clay is used as a filler. Furthermore, a much higher amount of this mechanochemically carbonated clay can be used as a filler while still resulting in acceptable or even improved concrete properties.

It was furthermore found that the durability of the concrete produced using said mechanochemically carbonated clay is considerably increased. Without wishing to be bound by any theory, the present inventors believe that this is due to enhanced micro and sub-microscale hydration, a reduced chloride permeability, reduced porosity of the concrete and/or passivation of free lime. Moreover, the increased oxygen content as compared to untreated precursors or feedstock may result in better dispersion in polar solvents, and better compatibility with materials that have epoxy or carboxyl functional groups.

Furthermore, as is shown in the appended examples, the water demand is decreased compared to pure cement, as well as compared to cement filled with non-carbonated clay. This is particularly surprising in view of the reduced particle size of the mechanochemically carbonated clay compared to the non-carbonated clay. A reduced particle size is generally associated with an increased water demand. The reduced water demand as compared to untreated feedstocks or pure cement may contribute to improved properties such as workability, compressive strength, permeability, watertightness, durability, weathering resistance, drying shrinkage and potential for cracking. For these reasons, limiting and controlling the amount of water in concrete is important for both constructability and service life. Thus, the present invention allows to have better control over the water demand. Without wishing to be bound by any theory, it is believed that the mechanochemical process of the invention may result in an increase in amorphous content when analyzed by XRD wherein at least some crystalline domains which may be present in a feedstock are maintained via an internal architecture in the form of microcrystallinity, which persists in a more generalized disordered structure. This disordered macro structure, thus, promotes higher reactivity and improves cement hydration.

Additionally, the production of the mechanochemically carbonated clay relies on a cheap CO₂ capture technology platform capable of operating on dilute CO₂ streams, such as directly on a point source emissions of a combustion plant, such that a filler is provided which can be produced in an economically viable manner and which combines both the CO₂ emission reduction achieved by reduced cement production and the CO₂ emission reduction achieved by CO₂ sequestration. Thus, the mechanochemically carbonated clay of the present invention, in particular the mechanochemically carbonated clay of the invention, constitutes an excellent filler for many applications, combining distinct mechanical properties with a cost-efficient CO₂ capture technology.

In another aspect, the invention provides a composition comprising a mechanochemically carbonated clay as described herein and a further material selected from the group consisting of asphalt, geopolymers, cement, polymers and combinations thereof.

In another aspect, the invention provides a method for preparing a composition as described herein, said method comprising the following steps:
(i) providing a mechanochemically carbonated clay as described herein;
(ii) providing a further material selected from the group consisting of asphalt, geopolymers, cement, polymers and combinations thereof; and
(iii) combining the mechanochemically carbonated clay of step (i) with the material of step (ii).

In another aspect, the invention provides a method for preparing concrete or mortar, said method comprising the following steps:
(i) providing a mechanochemically carbonated clay as described herein and a further material which is selected from the group consisting of asphalt, cement, geopolymers, and combinations thereof, optionally in the form of the composition as described herein wherein the further material is selected from the group consisting of asphalt, cement, geopolymers, and combinations thereof;
(ii) providing a construction aggregate; and
(iii) contacting, preferably mixing the mechanochemically carbonated clay and the further material of step (i) with the construction aggregate of step (ii) and optionally water.

In another aspect, the invention provides concrete or mortar obtainable by a method for preparing concrete described herein.

In another aspect the invention provides the use of a mechanochemically carbonated clay as described herein:
- as a filler, preferably as a filler in a material selected from the group consisting of asphalt, geopolymer, cement, mortar, polymers and combinations thereof;
- as a partial replacement for asphalt, geopolymer or cement in concrete or mortar;
- to increase the compressive strength of concrete or mortar;
- to improve the durability of concrete or mortar;
- to improve the durability of concrete or mortar by reducing chloride permeability and/or porosity;
- to improve the strength activity index of concrete or mortar; and/or
- to reduce the water demand of concrete or mortar,
   preferably,
- to concomitantly improve the strength activity index of concrete and reduce the water demand of concrete; or
- to concomitantly improve the strength activity index of mortar and reduce the water demand of mortar.

### Description of embodiments

The expression "comprise" and variations thereof, such as, "comprises" and "comprising" as used herein should be construed in an open, inclusive sense, meaning that the embodiment described includes the recited features, but that it does not exclude the presence of other features, as long as they do not render the embodiment unworkable.

The expressions "one embodiment", "a particular embodiment", "an embodiment" etc. as used herein should be construed to mean that a particular feature, structure or characteristic described in connection with the embodiment is included in at least one embodiment. Thus, the appearances of such expressions in various places throughout this specification do not necessarily all refer to the same embodiment. Furthermore, the particular features, structures, or characteristics may be combined in any suitable manner in one or more embodiments. For example, certain features of the disclosure which are described herein in the context of separate embodiments are also explicitly envisaged in combination in a single embodiment.

The singular forms "a," "an," and "the" as used herein should be construed to include plural referents unless the content clearly dictates otherwise. It should also be noted that the term "or" is generally employed in its broadest sense, that is as meaning "and/or" unless the content clearly dictates otherwise.

Whenever reference is made throughout this document to a compound which is a salt, this should be construed to include the anhydrous form as well as any solvates (in particular hydrates) of this compound.

The terms "clay precursor" and "clay" as used herein should be construed as a solid material comprising at least 50 wt.% of hydrous aluminium phyllosilicates, preferably at least 75 wt.% of hydrous aluminium phyllosilicates, more preferably at least 90 wt.% of hydrous aluminium phyllosilicates. The hydrous aluminium phyllosilicates are preferably selected from the kaolin group, the smectite group, the vermiculite group, or mixtures thereof. The clay may be calcined or non-calcined.

The term "mechanochemically carbonated clay" is used herein to refer to a clay obtainable by the mechanochemical carbonation method of the present invention.

In accordance with the invention, the BET surface area as referred to herein is determined at a temperature of 77K using a sample mass of 0.1-0.5g. The BET surface area as referred to herein is determined using nitrogen. A preferred analysis method to determine the BET surface area comprises heating samples to 400 °C for a desorption cycle prior to surface area analysis. A suitable and thus preferred analysis apparatus for determining the BET surface area is a Micromeritics Gemini VII 2390 Surface Analyzer preferably equipped with a Micromeritics FlowPrep 060 flowing-gas degassing unit.

TGA as used herein refers to Thermogravimetric Analysis, a technique known to the person skilled in the art. A preferred TGA setup to determine the CO₂ content of the feedstocks and carbonated materials in the context of the present invention is a Setaram TAG 16 TGA/DSC dual chamber balance employing a 0.1-2 mg sample. In accordance with the invention, the TGA is performed under an inert atmosphere, such as nitrogen or argon.

In accordance with the invention, the particle size distribution characteristics referred to herein such as D10, D50 and D90 as well as the specific surface area (unless explicitly mentioned to be BET surface area) are determined by measuring with a laser light scattering particle size analyzer utilizing the Fraunhofer theory of light scattering, such as the Brookhaven laser particle sizer, Model Microbrook 2000LD or another instrument of equal or better sensitivity and reporting the data using a volume equivalent sphere model. As is known to the skilled person, the D50 is the mass median diameter, i.e. the diameter at which 50% of a sample's mass is comprised of smaller particles. Similarly, the D10 and D90 represent the diameter at which 10 or 90% of a sample's mass is comprised of smaller particles.

The Total Carbon (TC) content referred to herein is preferably determined in accordance with the method described on Soil Sampling and Methods of Analysis, 2nd Ed., CRC Press (2008), p. 244 and further, incorporated herein by reference. The Total Carbon (TC) content is always expressed herein as wt.% based on the total weight of the composition being measured, i.e. based on the total weight of the clay precursor, or based on the total weight of the carbonated clay.

In accordance with the invention, the compressive strength, strength-activity index and water demand as referred to herein is determined in accordance with ASTM C311/C311 M-22. As will be evident to the skilled person, in performing these tests, the clay precursor or the carbonated clay of the present invention was used instead of the "fly ash or natural pozzolan" specified by the standard.

For the purposes of the present disclosure, ideal gas law is assumed such that the vol% of a gas is considered as equal to the mol%.

### Mechanochemically carbonated clay

In a first aspect the invention provides a mechanochemically carbonated clays which has a specific surface area of less than 50 m²/g. The mechanochemically carbonated clay preferably has a CO₂ content of more than 0.8 wt.% (by total weight of the mechanochemically carbonated clay), preferably more than 1 wt.% (by total weight of the mechanochemically carbonated clay), more preferably more than 1.5 wt.% (by total weight of the mechanochemically carbonated clay), wherein the CO₂ content is determined as the mass loss above 450°C measured by TGA employing a temperature trajectory wherein the temperature was increased from room temperature to 800°C at a rate of 10 °C/min.

In preferred embodiments the mechanochemically carbonated clay meets the strength requirements set out in ASTM C618-12a (2012).

In preferred embodiments of the invention, the mechanochemically carbonated clay has a specific surface area of at least 0.6 m²/g, preferably at least 0.7 m²/g, more preferably at least 0.8 m²/g.

In preferred embodiments of the invention, the mechanochemically carbonated clay has a specific surface area of less than 50 m²/g, preferably less than 30 m²/g, more preferably less than 15 m²/g. For example, the mechanochemically carbonated clay has a specific surface area of at most 50 m²/g, at most 48 m²/g, at most 46 m²/g, at most 44 m²/g, at most 42 m²/g, at most 40 m²/g, at most 38 m²/g, at most 36 m²/g, at most 34 m²/g, at most 32 m²/g, at most 30 m²/g, at most 28 m²/g, at most 26 m²/g, at most 24 m²/g, at most 22 m²/g, at most 20 m²/g, at most 18 m²/g, at most 16 m²/g, at most 15 m²/g, at most 12 m²/g, at most 10 m²/g, at most 8 m²/g, at most 6 m²/g, at most 4 m²/g, at most 2 m²/g, etc.

In highly preferred embodiments of the invention, the mechanochemically carbonated clay has a specific surface area of less than 5 m²/g, preferably less than 3 m²/g, more preferably less than 2 m²/g. For example, the mechanochemically carbonated clay has a specific surface area of less than 5.0 m²/g, less than 4.5 m²/g, less than 4.0 m²/g, less than 3.5 m²/g, less than 3.0 m²/g, less than 2.5 m²/g, less than 2.0 m²/g, less than 1.5 m²/g, etc.

The inventors have observed that a mechanochemically carbonated clay having a specific surface area within the ranges specified herein have particular properties when considering performance, handling, etc. in comparison to untreated precursors or even carbonated materials with other surface areas. Hence, in accordance with highly preferred embodiments of the invention, the mechanochemically carbonated clay has a specific surface area in a region defined according to the upper and lower bounds described herein, such as a specific surface area in the range of 0.3-50 m²/g, preferably 0.3-30 m²/g, more preferably 0.3-10 m²/g; a specific surface area in the range of 0.4-50 m²/g, preferably 0.4-30 m²/g, more preferably 0.4-10 m²/g; a specific surface area in the range of 0.5-50 m²/g, preferably 0.5-30 m²/g, more preferably 0.5-10 m²/g; a specific surface area in the range of 0.3-5.0 m²/g, preferably 0.3-3.0 m²/g, more preferably 0.3-2.0 m²/g; a specific surface area in the range of 0.4-5.0 m²/g, preferably 0.4-3.0 m²/g, more preferably 0.4-2.0 m²/g; a specific surface area in the range of 0.5-5.0 m²/g, preferably 0.5-3.0 m²/g, more preferably 0.5-2.0 m²/g., etc.

In embodiments of the invention, the mechanochemically carbonated clay has one, two, or three, preferably three, of the following characteristics:
- a D10 within the range of 0.005-3 µm, preferably 0.01-2 µm, most preferably 0.1-1.4 µm;
- a D50 within the range of 0.1-30 µm, preferably 0.5-15 µm, most preferably 1-10 µm;
- a D90 within the range of 0.5-100 µm, preferably 1-80 µm, most preferably 5-70 µm.

In embodiments of the invention, the mechanochemically carbonated clay has a total carbon content of at least 0.75 wt.%, preferably at least 0.85 wt.%, more preferably at least 0.9 wt.%. The inventors have observed that a mechanochemically carbonated clay having a total carbon content of at least 1 wt.%, preferably at least 1.5 wt.%, more preferably at least 2 wt.%, provided even better results. Hence, in preferred embodiments, mechanochemically carbonated clay has a total carbon content of at least 1 wt.%, preferably at least 1.5 wt.%, more preferably at least 2 wt.%, provided even better results.

Without wishing to be bound by any theory, the present inventors believe that the specific surface area increase effected by the dry mechanochemical carbonation method of another aspect of the invention (which is described herein elsewhere) is associated with the beneficial properties observed (such as the excellent strength activity index, and reduced water demand). Hence, in embodiments of the invention, the mechanochemically carbonated clay described herein is provided which is obtainable by concomitant carbonation and specific surface area increase of a clay precursor wherein the ratio of the specific surface area of the mechanochemically carbonated clay to the specific surface area of the clay precursor is at least 1.2:1, preferably at least 1.4:1, more preferably at least 1.6:1.

Without wishing to be bound by any theory, the present inventors believe that the BET surface area increase effected by the dry mechanochemical carbonation method of another aspect of the invention (which is described herein elsewhere) is associated with the beneficial properties observed (such as the excellent strength activity index, and reduced water demand). Hence, in embodiments of the invention, the mechanochemically carbonated clay described herein is provided which is obtainable by concomitant carbonation and BET surface area increase of a clay precursor wherein the ratio of the BET surface area of the mechanochemically carbonated clay to the BET surface area of the clay precursor is at least 2:1, preferably at least 3:1, more preferably at least 3.5:1.

Without wishing to be bound by any theory, the present inventors believe that the BET surface area increase effected by the dry mechanochemical carbonation method of another aspect of the invention (which is described herein elsewhere) may largely be attributed to an increase in the number of pores, observed by a decrease in the average pore width and an increase in the total pore surface area. Hence, in embodiments of the invention, the mechanochemically carbonated clay is provided which is obtainable by concomitant carbonation and BET surface area increase of a clay precursor wherein the BJH desorption cumulative surface area of pores of the mechanochemically carbonated clay is at least 110%, preferably at least 120%, more preferably at least 150%, of the BJH desorption cumulative surface area of pores of the clay precursor and the desorption average pore width (4V/A by BET) of the mechanochemically carbonated clay is no more than 90%, preferably no more than 85%, more preferably no more than 80%, of the desorption average pore width (4V/A by BET) of the clay precursor.

In accordance with the invention, the mechanochemically carbonated clay typically has a strength activity index (SAI) at day 7 which is at least 75%, preferably at least 80%. The inventors have observed that the mechanochemical process of the present invention allows obtaining carbonated clay having excellent day 7 SAI. Hence, in preferred embodiments the mechanochemically carbonated clay has a SAI at day 7 of at least 105%, preferably at least 110%, even more preferably at least 125%.

In embodiments of the invention, the mechanochemically carbonated clay has a strength activity index (SAI) at day 28 which is at least 75%, preferably at least 95%, more preferably at least 100%. The inventors have observed that the mechanochemical process of the present invention allows obtaining carbonated clay having excellent day 28 SAI. Hence, in preferred embodiments the mechanochemically carbonated clay has a SAI at day 28 of at least 110%, preferably at least 115%, even more preferably at least 125%.

In embodiments of the invention, the mechanochemically carbonated clay has a water demand which is less than 97%, preferably less than 96%, more preferably less than 95%. The inventors have observed that the mechanochemical process of the present invention allows obtaining carbonated clay having an extremely low water demand. Hence, in preferred embodiments the mechanochemically carbonated clay has a water demand which is less than 93%, preferably less than 91%.

### Method for the production of mechanochemically carbonated clay and mechanochemically carbonated clay obtainable thereby

Without wishing to be bound by any theory, the present inventors believe that the dry mechanochemical carbonation method of the present invention imparts unique and desirable properties to the carbonated clay obtainable by this method. For example, it is believed that the unique surface area and pore properties effected by the dry mechanochemical carbonation method of the present invention is important to achieve the surprising performance of the materials in e.g. concrete.

In a further aspect, the invention provides a method for producing a mechanochemically carbonated clay, said method comprising the following steps:
a) providing a feedstock comprising or consisting of a clay precursor;
b) providing a gas comprising CO₂;
c) introducing said solid feedstock and said gas into a mechanical agitation unit; and
d) subjecting the material of said solid feedstock to a mechanical agitation operation in the presence of said gas in said mechanical agitation unit to obtain the mechanochemically carbonated clay.

### Process description

The term "feedstock" is to be interpreted as a material consisting of or comprising a clay precursor. The clay may be mixed with other materials to form the feedstock (e.g. as is the case when shale is used as a feedstock) or it may consist essentially of clay. The term "precursor" is used to designate the clay before it is submitted to the mechanochemical carbonation of the invention. However, preferably, the feedstock consists essentially of a clay precursor as this allows optimisation of process conditions to achieve the desired carbonated clay properties without having to take into account the properties of other materials present in the feedstock.

It is within the capacity of one skilled in the art, in light of the guidance provided in the present disclosure, to adapt the relevant process parameters such that a mechanochemically carbonated clay is obtained which has the properties recited herein.

The gas provided in step (b) may be any gas stream comprising CO₂, such as regular air, a waste gas stream having a low CO₂ concentration, or concentrated CO₂ streams.

In embodiments of the method described herein the gas provided in step (b) is regular air.

In highly preferred embodiments of the method described herein the gas provided in step (b) is a combustion flue gas, in particular a flue gas from fossil fuel combustion, wood pellet combustion, biomass combustion or municipal waste combustion. Fossil fuel combustion may be coal, petroleum coke, petroleum, natural gas, shale oil, bitumens, tar sand oil, or heavy oils combustion, or any combination thereof. The combustion flue gas may optionally have been treated to reduce the water content, the SO₂ content, and/or the NOx content.

The CO₂ concentration in the gas provided in step (b) is preferably at least 0.1 vol%, more preferably at least 0.5 vol%. Typical CO₂ concentrations for combustion flue gas are in the range of 1-15 vol%, such as 2-10 vol%, such that it is preferred that the gas provided in step (b) has a CO₂ concentration in the range of 1-15 vol%, such as 2-10 vol%. In alternative embodiments of the invention, the gas provided in step (b) comprises at least 80 vol% CO₂, preferably at least 95 vol% CO₂. In some embodiments of the invention, the gas provided in step (b) comprises at least 80 vol% CO₂, preferably at least 95 vol% CO₂ and less than 1000 ppm (v/v) H₂O, preferably less than 100 ppm (v/v) H₂O. In some embodiments, the gas provided in step (b) comprises CO₂ in at least 0.1 vol% and H₂O in the range of 5-25 vol%. For example, in case of flue gas, the gas provided in step (b) preferably comprises CO₂ in the range of 1-15 vol%, such as 2-10 vol% and H₂O in the range of 5-25 vol%, such as 15-20 vol%. The gas is typically not in a supercritical state as this is not necessary for the mild mechanochemical carbonation process of the present invention. Hence in any embodiment of the invention, it is highly preferred that the gas is not in a supercritical state.

In some embodiments of the invention, the method described herein is provided with the provision that the temperature and pressure during step (d) are such that the pressure is lower than the saturated vapour pressure of water at the temperature in the mechanical agitation unit.

The expression "in the presence of said gas" in step (d) should be construed to mean that the atmosphere inside the mechanical agitation unit consists essentially of the gas provided in step (b) when step (d) is initiated. It will be understood by the skilled person that the composition of the gas will change as the reaction progresses unless the reactor (the mechanical agitation unit) is continuously purged or replenished.

In general, step (d) can be performed at atmospheric pressure, below atmospheric pressure or above atmospheric pressure. In general it is preferred that step (d) is performed at or above atmospheric pressure. Hence, it is preferred that step (d) is performed at a pressure of at least about 100 kPa (e.g. at least 101.325 kPa). In preferred embodiments of the invention, step (d) is performed at a pressure of more than around 300 kPa (e.g., 303.975 kPa), preferably more than around 600 kPa (e.g., 607.95 kPa). In alternative embodiments of the invention, step (d) is performed at pressures of less than around 100 kPa (e.g. at least 101.325 kPa), such as less than 50 kPa or less than 10 kPa. It will be understood by the skilled person that (if not actively maintained) the pressure of the gas will change as the reaction progresses. In these embodiments it should be understood that the pressure inside the mechanical agitation unit is as specified herein when step (d) is initiated. In some embodiments the pressure inside the mechanical agitation unit is as specified herein throughout step (d).

In highly preferred embodiments of the method described herein, in order to stimulate carbonation, step (d) is performed at a temperature of less than 150 °C, preferably less than 100 °C, preferably less than 90 °C, more preferably less than 80 °C, most preferably less than 75 °C. In highly preferred embodiments of the invention, step (d) is performed at a temperature within the range of 45-85 °C, preferably 55-70 °C. In preferred embodiments of the invention, no active heating is applied and any increase in temperature is attributed to friction resulting from the mechanical agitation or to exothermic reactions taking place during the mechanochemical carbonation. The temperature is preferably determined on the solid material in the reactor (i.e. the mechanical agitation unit) during processing.

The low temperature requirement of the present process means that no fossil fuels are required, and electric heating means (or low caloric value green fuel sources) can realistically be used to supply heat in case friction caused by the mechanical agitation is insufficient to reach the desired temperature, such as more than 45 °C. In this way, fossil fuels can be avoided throughout the whole production chain.

As with any chemical process, the appropriate reaction time is highly dependent on the extent of carbonation desired, the surface area desired, as well as the pressure, temperature and mechanochemical agitation applied and can easily be determined by sampling material on a regular basis and monitoring reaction progress e.g. via BET analysis, particle size analysis and Total Carbon determination as explained herein.

The present inventors have furthermore found that the mechanochemical carbonation methods described herein may advantageously be performed without employing additional oxidizing agents such as acids. Hence, the mechanochemical carbonation methods described herein are preferably performed without employing a strong acid, preferably without employing any further oxidizing agent other than the gas provided in step (b).

In preferred embodiments of the invention, the mechanical agitation operation of step (d) comprises grinding, milling, mixing, stirring (such as low-speed stirring or high-speed stirring), shearing (such as high-torque shearing), shaking, blending, pulverizing, powderizing, crushing, crumbling, a fluidized bed or ultrasonication, preferably grinding, milling, mixing, stirring (such as low-speed stirring or high-speed stirring), shearing (such as high-torque shearing), or ultrasonication. The present inventors have found that the mechanochemical carbonation process is facilitated if the mechanochemical agitation operation of step (d) the mechanochemical agitation operation of step (d) is performed in the presence of grinding or milling media, preferably balls or beads. A preferred material is stainless steel or aluminium oxide. In such highly preferred embodiments of the invention, the mechanical agitation operation may be simply rotating the mechanical agitation unit containing the solid feedstock, the grinding or milling media, and the gas. For example, grinding or milling media can be made from steel (e.g. AISI H13, modified H10), chrome white cast irons (e.g. ASTM A532), molybdenum steel (e.g. AISI M2, M4, M-42), chromium-based steels (e.g. H11, H12, H13 CPM V9, ZDP-189) or other media with a target HRC hardness of 60. Such grinding media can be utilized with or without surface treatments such as nitriding and carburizing.This can conveniently be performed in a rotating drum. It will be understood that the product obtainable by the process of the invention when performed in a rotating drum, may also be obtainable using alternative grinding or milling techniques known to the skilled person.

In preferred embodiments of the invention, step (d) is performed in the presence of a catalyst, preferably a metal oxide catalyst, such as a transition metal oxide catalyst. Examples of suitable catalysts are selected from the group consisting of iron oxides, cobalt oxides, ruthenium oxides, titanium oxides, nickel oxides, aluminium oxides and combinations thereof.

Hence, as will be understood from the above, in highly preferred embodiments of the invention, step (d) comprises grinding, milling, mixing, stirring (such as low-speed stirring or high-speed stirring), shearing (such as high-torque shearing), shaking, blending, pulverizing, powderizing, crushing, crumbling, a fluidized bed or ultrasonication, preferably grinding, milling, mixing, stirring (such as low-speed stirring or high-speed stirring), shearing (such as high-torque shearing), or ultrasonication, in the presence of grinding or milling media and a metal oxide catalyst.

The present inventors have found that it is advantageous with a view to the efficiency of the mechanochemical carbonation (e.g. reaction time, CO₂ absorption and particle size reduction) to employ media as described herein before coated with said metal oxide catalyst and/or to employ a mechanical agitation unit (or parts thereof) which are coated with said metal oxide catalyst. As explained herein elsewhere, the mechanical agitation operation may be simply rotating the mechanical agitation unit containing the feedstock or the clay precursor for mechanochemical carbonation, the grinding or milling media, the metal oxide catalyst and the gas. This can conveniently be performed in a rotating drum.

As will be clear from the present description, step (d) is a substantially dry process. While some moisture may be present, step (d) is not performed on an aqueous solution or slurry. The present inventors have found that this greatly improves energy efficiency (as no water has to be removed afterwards) and imparts unique properties on the resulting mechanochemically carbonated clays, yielding materials which are substantially different from e.g. aqueous carbonation materials. This is also reflected in their distinct properties, e.g. when used as a filler in concrete. In embodiments of the invention, the solid feedstock preferably has a moisture content of less than 30 wt.% (by total weight of the solid feedstock), preferably less than 20 wt.%.

In particular, the present inventors have found that it is important that step (d) is carried out such that certain extents of carbonation, size reduction and/or surface area increase are effect during step (d), i.e. during the combined carbonation and mechanical agitation. This results in markedly different materials from materials which were e.g. milled and subsequently carbonated.

Thus, in highly preferred embodiments of the invention, the method of the invention is provided wherein carbonation, size reduction and/or surface area increase are effected during step (d) such that the method has one, two, or all three, preferably all three, of the following characteristics
- the ratio of the CO₂ content of the mechanochemically carbonated clay obtained in step (d) to the CO₂ content of the clay precursor of step (a) is at least 1.1:1, preferably at least 1.15:1, more preferably at least 1.2:1, wherein the CO₂ content is determined as the mass loss above 450°C measured by TGA employing a temperature trajectory wherein the temperature was increased from room temperature to 800°C at a rate of 10 °C/min;
- the ratio of the D50 of the mechanochemically carbonated clay obtained in step (d) to the D50 of the clay precursor of step (a) is less than 0.9:1, preferably less than 0.85:1, more preferably less than 0.8:1;
- the ratio of the specific surface area of the mechanochemically carbonated clay obtained in step (d) to the specific surface area of the clay precursor of step (a) is at least 1.15:1, preferably at least 1.2:1, more preferably at least 1.25:1.

As is shown in the examples, certain materials have additional improved strength and/or water demand characteristics. Hence, in some particularly preferred embodiments of the invention, the method of the invention is provided wherein carbonation, size reduction and/or surface area increase are effected during step (d) such that the method has one, two, or all three, preferably all three, of the following characteristics
- the ratio of the CO₂ content of the mechanochemically carbonated clay obtained in step (d) to the CO₂ content of the clay precursor of step (a) is at least 1.5:1, preferably at least 1.75:1, more preferably at least 2:1, wherein the CO₂ content is determined as the mass loss above 450°C measured by TGA employing a temperature trajectory wherein the temperature was increased from room temperature to 800°C at a rate of 10 °C/min;
- the ratio of the D50 of the mechanochemically carbonated clay obtained in step (d) to the D50 of the clay precursor of step (a) is less than 0.8:1, preferably less than 0.75:1, more preferably less than 0.1:1;
- the ratio of the specific surface area of the mechanochemically carbonated clay obtained in step (d) to the specific surface area of the clay precursor of step (a) is at least 2:1, preferably at least 5:1, more preferably at least 10:1.

The inventors have observed that the method of the invention is preferably provided wherein carbonation is effected during step (d) such that the ratio of the total carbon content of the mechanochemically carbonated clay obtained in step (d) to the total carbon content of the clay precursor of step (a) is at least 1.3:1, more preferably at least 1.35:1. The inventors have observed that methods wherein said ratio is at least 1.4:1, preferably at least 1.6:1, more preferably at least 1.8:1, provided even better results such that these are preferred.

Without wishing to be bound by any theory, the present inventors believe that the BET surface area increase effected by the dry mechanochemical carbonation method is associated with the beneficial properties observed (such as the excellent strength activity index, and reduced water demand). Hence, in highly preferred embodiments of the invention, the method of the invention is provided wherein carbonation and BET surface area increase are effected during step (d) such that the ratio of the BET surface area of the mechanochemically carbonated clay to the BET surface area of the clay precursor is at least 2:1, preferably at least 3:1, more preferably at least 3.5:1.

The skilled person will understand that, as the material of step (a) is fed to step (d), this means that the carbonation, size reduction and/or surface area specified above is effected during step (d).

In particularly preferred embodiments of the method of the invention, the BJH desorption cumulative surface area of pores of the mechanochemically carbonated clay obtained in step (d) is at least 110%, preferably at least 120%, more preferably at least 150%, of the BJH desorption cumulative surface area of pores of the clay precursor and the desorption average pore width (4V/A by BET) of the mechanochemically carbonated clay obtained in step (d) is no more than 90%, preferably no more than 85%, more preferably no more than 80%, of the desorption average pore width (4V/A by BET) of the clay precursor.

### Properties of the clay precursor used in the mechanochemical carbonation method of the present invention

In preferred embodiments of the method described herein, the clay precursor is a particulate solid material which has a specific surface area of less than 20 m²/g, preferably less than 10 m²/g, more preferably less than 2 m²/g.

In highly preferred embodiments of the invention, the clay precursor has one, two, or three, preferably three, of the following characteristics:
- a D10 within the range of 0.1-50 µm, preferably 0.1-20 µm, most preferably 0.1-10 µm;
- a D50 within the range of 5-200 µm, preferably 10-200 µm, most preferably 10-150 µm;
- a D90 within the range of 10-1000 µm, preferably 20-750 µm, most preferably 40-500 µm.

### Properties of the mechanochemically carbonated clay obtained in step (d)

In preferred embodiments of the method for producing a carbonated clay described herein, the carbonated clay obtained in step (d) a specific surface area of less than 50 m²/g. The mechanochemically carbonated clay obtained in step (d) preferably has a CO₂ content of more than 0.8 wt.% (by total weight of the mechanochemically carbonated clay), preferably more than 1 wt.% (by total weight of the mechanochemically carbonated clay), more preferably more than 1.5 wt.% (by total weight of the mechanochemically carbonated clay), wherein the CO₂ content is determined as the mass loss above 450°C measured by TGA employing a temperature trajectory wherein the temperature was increased from room temperature to 800°C at a rate of 10 °C/min.

In preferred embodiments the mechanochemically carbonated clay obtained in step (d) meets the strength requirements set out in ASTM C618-12a (2012).

In preferred embodiments of the invention, the mechanochemically carbonated clay obtained in step (d) has a specifoc surface area of at least 0.6 m²/g, preferably at least 0.7 m²/g, more preferably at least 0.8 m²/g.

In preferred embodiments of the invention, the mechanochemically carbonated clay obtained in step (d) has a specific surface area of less than 50 m²/g, preferably less than 30 m²/g, more preferably less than 15 m²/g. For example, the mechanochemically carbonated clay obtained in step (d) has a specific surface area of at most 50 m²/g, at most 48 m²/g, at most 46 m²/g, at most 44 m²/g, at most 42 m²/g, at most 40 m²/g, at most 38 m²/g, at most 36 m²/g, at most 34 m²/g, at most 32 m²/g, at most 30 m²/g, at most 28 m²/g, at most 26 m²/g, at most 24 m²/g, at most 22 m²/g, at most 20 m²/g, at most 18 m²/g, at most 16 m²/g, at most 15 m²/g, at most 12 m²/g, at most 10 m²/g, at most 8 m²/g, at most 6 m²/g, at most 4 m²/g, at most 2 m²/g, etc.

In highly preferred embodiments of the invention, the mechanochemically carbonated clay obtained in step (d) has a specific surface area of less than 5 m²/g, preferably less than 3 m²/g, more preferably less than 2 m²/g. For example, the mechanochemically carbonated clay has a specific surface area of less than 5.0 m²/g, less than 4.5 m²/g, less than 4.0 m²/g, less than 3.5 m²/g, less than 3.0 m²/g, less than 2.5 m²/g, less than 2.0 m²/g, less than 1.5 m²/g, etc.

The inventors have observed that a mechanochemically carbonated clay having a specific surface area within the ranges specified herein have particular properties when considering performance, handling, etc. in comparison to untreated precursors or even carbonated materials with other surface areas. Hence, in accordance with highly preferred embodiments of the invention, the mechanochemically carbonated clay obtained in step (d) has a specific surface area in a region defined according to the upper and lower bounds described herein, such as a specific surface area in the range of 0.6-50 m²/g, preferably 0.6-30 m²/g, more preferably 0.6-10 m²/g; a specific surface area in the range of 0.8-50 m²/g, preferably 0.8-30 m²/g, more preferably 0.8-10 m²/g; a specific surface area in the range of 1-50 m²/g, preferably 1-30 m²/g, more preferably 1-10 m²/g; a specific surface area in the range of 0.6-5.0 m²/g, preferably 0.6-3.0 m²/g, more preferably 0.6-2.0 m²/g; a specific surface area in the range of 0.8-5.0 m²/g, preferably 0.8-3.0 m²/g, more preferably 0.8-2.0 m²/g; a specific surface area in the range of 1-5.0 m²/g, preferably 1-3.0 m²/g, more preferably 1-2.0 m²/g., etc.

In embodiments of the invention, the mechanochemically carbonated clay obtained in step (d) has one, two, or three, preferably three, of the following characteristics:
- a D10 within the range of 0.005-3 µm, preferably 0.01-2 µm, most preferably 0.1-1.4 µm;
- a D50 within the range of 0.1-30 µm, preferably 0.5-15 µm, most preferably 1-10 µm;
- a D90 within the range of 0.5-100 µm, preferably 1-80 µm, most preferably 5-70 µm.

In embodiments of the invention, the mechanochemically carbonated clay obtained in step (d) has a total carbon content of at least 0.75 wt.%, preferably at least 0.85 wt.%, more preferably at least 0.9 wt.%. The inventors have observed that a mechanochemically carbonated clay having a total carbon content of at least 1 wt.%, preferably at least 1.5 wt.%, more preferably at least 2 wt.%, provided even better results. Hence, in preferred embodiments, mechanochemically carbonated clay obtained in step (d) has a total carbon content of at least 1 wt.%, preferably at least 1.5 wt.%, more preferably at least 2 wt.%, provided even better results.

In accordance with the invention, the mechanochemically carbonated clay obtained in step (d) typically has a strength activity index (SAI) at day 7 which is at least 75%, preferably at least 80%. The inventors have observed that the mechanochemical process of the present invention allows obtaining carbonated clay having excellent day 7 SAI. Hence, in preferred embodiments the mechanochemically carbonated clay obtained in step (d) has a SAI at day 7 of at least 105%, preferably at least 110%, even more preferably at least 125% .

In embodiments of the invention, the mechanochemically carbonated clay obtained in step (d) has a strength activity index (SAI) at day 28 which is at least 75%, preferably at least 95%, more preferably at least 100%. The inventors have observed that the mechanochemical process of the present invention allows obtaining carbonated clay having excellent day 28 SAI. Hence, in preferred embodiments the mechanochemically carbonated clay obtained in step (d) has a SAI at day 28 of at least 110%, preferably at least 115%, even more preferably at least 125%.

In embodiments of the invention, the mechanochemically carbonated clay obtained in step (d) has a water demand which is less than 97%, preferably less than 96%, more preferably less than 95%. The inventors have observed that the mechanochemical process of the present invention allows obtaining carbonated clay having an extremely low water demand. Hence, in preferred embodiments the mechanochemically carbonated clay obtained in step (d) has a water demand which is less than 93%, preferably less than 91%.

### The mechanochemically carbonated clay obtainable by the method described herein

The present inventors have found that the mechanochemical carbonation described herein imparts unique properties on the resulting mechanochemically carbonated clays, yielding materials which are substantially different from e.g. aqueous carbonation materials. This is also reflected in their distinct properties, e.g. when used as a filler in concrete. In particular, the present inventors have found that it is important that step (d) is carried out such that certain extents of carbonation, size reduction and/or surface area increase are effect during step (d), i.e. during the combined carbonation and mechanical agitation. This results in markedly different materials from materials which were e.g. carbonated in an aqueous environment, or even materials which were milled and subsequently carbonated.

Hence, in another aspect the invention provides the mechanochemically carbonated clay obtainable by the method for producing mechanochemically carbonated clay described herein.

As will be understood by the skilled person in light of the present disclosure, the mechanochemically carbonated clay of the present invention constitutes an excellent filler for many applications, combining distinct mechanical properties with a cost-efficient CO₂ sequestration approach.

### Composition comprising a mechanochemically carbonated clay, and method for the preparation thereof

Hence, in another aspect the invention provides a composition comprising a mechanochemically carbonated clay as described herein and a further material selected from the group consisting of asphalt, cement, geopolymers, polymers, and combinations thereof, preferably cement, more preferably Portland cement.

In embodiments of the invention, the further material is a polymer selected from thermoplastic polymers and thermosetting polymers. In preferred embodiments of the invention, the further component is a polymer selected from the group consisting of epoxide resin, phenol-formaldehyde resin, polyalkylene terephthalate (preferably polyethylene terephthalate), polalkylene adipate terephthalate (preferably polybutylene adipate terephthalate), polyalkylene isosorbide terephthalate (preferably polyethylene isosorbide terephthalate), polyalkylene aromatic polyamide (preferably polyethylene aromatic polyamide), polyacrylonitrile, polyacetal, polyimide, aromatic polyester, polyisoprene (preferably cis-1,4-polyisoprene), polyethylene, polypropylene, polyurethane, polyisocyanurate, polyamide, polyether, polyester, polyhydroxyalkanoate, polylactic acid, poly lactic-co-glycolic acid, polyvinylidene fluoride, polyvinyl acetate, polyvinyl chloride, polystyrene, polytetrafluoroethylene, acrylonitrile-butadiene-styrene, nitrile rubber, styrenebutadiene, ethylene-vinyl acetate, copolymers thereof and combinations thereof, more preferably a polyolefin, such as polypropylene, polyethylene, copolymers thereof and combinations thereof. The term "polymer" as used herein includes copolymers, such as block copolymers.

In highly preferred embodiments the further material is selected from cement, asphalt, geopolymers or combinations thereof.

In accordance with the invention, the cement may be a hydraulic or non-hydraulic cement. In preferred embodiments of the invention, the cement is a hydraulic cement, such as Portland cement. In highly preferred embodiments of the invention, the cement is one of the cements defined in EN197-1 (2011), preferably Portland cement as defined in EN197-1 (2011).

In embodiments of the invention, the composition comprises at least 0.1 wt.% (by total weight of the composition), preferably at least 1 wt.%, more preferably more than 5 wt.% of the mechanochemically carbonated clay and/or at least 0.1 wt.% (by total weight of the composition), preferably more than 1 wt.%, more preferably more than 20 wt.% of the further material.

In embodiments of the invention, the composition comprises less than 60 wt.% (by total weight of the composition), preferably less than 50 wt.%, more preferably less than 45 wt.% of the mechanochemically carbonated clay and/or less than 95 wt.% (by total weight of the composition), preferably less than 90 wt.%, more preferably less than 80 wt.% of the further material.

In embodiments of the invention, the composition is provided wherein the weight:weight ratio of the mechanochemically carbonated clay to the further material is within the range of 1:9 to 2:1, preferably within the range of 1:8 to 1:1, more preferably within the range of 1:6 to 5:6.

In embodiments of the invention, the composition comprises 5-70 wt.% (by total weight of the composition), preferably 10-60 wt.%, more preferably 20-50 wt.% of the mechanochemically carbonated clay and 30-95 wt.% (by total weight of the composition), preferably 40-90 wt.%, preferably 50-80 wt.% of the further material.

In embodiments of the invention, the composition comprises less than 5 wt.% (by total weight of the composition water, preferably less than 1 wt.%, more preferably less than 0.1 wt.%. The amount of water can suitably be determined as the mass loss up to 120°C measured by TGAMS employing a temperature trajectory wherein the temperature was increased from room temperature to 800°C at a rate of 10°C/min.

In embodiments of the invention, the composition consists of the mechanochemically carbonated clay and the further material.

In another aspect the invention provides a method for preparing a composition as described herein, said method comprising the following steps:
(i) providing a mechanochemically carbonated clay as described herein, preferably a mechanochemically carbonated clay as described herein;
(ii) providing a further material selected from the group consisting of asphalt, cement, geopolymers, polymers and combinations thereof;
(iii) combining the mechanochemically carbonated clay solid of step (i) with the material of step (ii).

### A method for preparing concrete or mortar

Hence, in another aspect the invention provides a method for preparing concrete or mortar, said method comprising the following steps:
(i) providing a mechanochemically carbonated clay as described herein and a further material which is selected from the group consisting of asphalt, cement, geopolymers, and combinations thereof, optionally in the form of the composition as described herein wherein the further material is selected from the group consisting of asphalt, cement, geopolymers, and combinations thereof;
(ii) providing a construction aggregate; and
(iii) contacting, preferably mixing the mechanochemically carbonated clay and the further material of step (i) with the construction aggregate of step (ii) and optionally water.

In another aspect the invention provides a concrete or mortar obtainable by the method for preparing concrete as described herein.

In preferred embodiments of the invention, step (iii) further comprises contacting, preferably mixing the mechanochemically carbonated clay and the further material of step (i) with the construction aggregate of step (ii) and water. In accordance with the invention, the mechanochemically carbonated clay and the further material of step (i), the construction aggregate of step (ii) and the water may be contacted, preferably mixed at substantially the same time, or in a step-wise manner wherein the composition of step (i) is first contacted, preferably mixed with water, before being contacted, preferably mixed with the construction aggregate of step (ii).

In another aspect the invention provides the use of a mechanochemically carbonated clay as described herein:
- as a filler, preferably as a filler in a material selected from the group consisting of asphalt, cement, geopolymers, mortar, polymers and combinations thereof;
- as a partial replacement for asphalt, geopolymer or cement in concrete or mortar;
- to increase the compressive strength of concrete or mortar;
- to improve the durability of concrete or mortar;
- to improve the durability of concrete or mortar by reducing chloride permeability and/or porosity;
- to improve the strength activity index of concrete or mortar; and/or
- to reduce the water demand of concrete or mortar,
   preferably,
- to concomitantly improve the strength activity index of concrete and reduce the water demand of concrete; or
- to concomitantly improve the strength activity index of mortar and reduce the water demand of mortar.

### Examples

The BET surface area (SSA), the BJH desorption cumulative surface area of pores and the desorption average pore width (4V/A by BET) were determined at a temperature of 77K using a sample mass of 0.5-1g wherein samples were heated to 400 °C for a desorption cycle prior to surface area analysis.

Particle Size Distribution and specific surface area measurements were carried out on a Brookhaven laser particle sizer, Model Microbrook 2000LD using utilizing the Fraunhofer theory of light scattering and reporting the data using a volume equivalent sphere model.

Compressive strength, strength activity index and water demand was measured in accordance with ASTM C311/C311M-22. As will be evident to the skilled person, in performing these tests, the clay precursor or the carbonated clay of the present invention was used instead of the "fly ash or natural pozzolan" specified by the standard.

The CO₂ content was determined as the mass loss above 450 °C as measured by TGA employing a temperature trajectory wherein the temperature was increased from room temperature to 800 °C at a rate of 10°C/min. A Setaram TAG 16 TGA/DSC dual chamber balance employing a 0.1-2 mg sample under an inert nitrogen atmosphere was used.

### Example 1

### Sample A

Mechanochemically carbonated clay was produced by inserting 0.4 kg of clay precursor (non-calcined clay) into a pressure cell with 2 kg of first milling media (stainless steel ball bearing(s) of 5 mm size) and with 5 kg of second milling media (stainless steel ball bearing(s) of 1 mm size). The cell is pressurized with concentrated CO₂ gas and rotated on rollers at 65 RPM for 5 days to obtain mechanochemically carbonated clay. The clay precursor was used as received. The reaction was initiated at room temperature and no heating or cooling was applied. The properties of the clay precursor (A1) and the obtained mechanochemically carbonated clay (A2) are shown in the below table.

### Samples B

Mechanochemically carbonated clay was produced by inserting 5 kg of clay precursor (calcined clay, different origin from sample A) into a pressure cell with 150 kg of milling media (ceramic bearings of 10 mm size). The cell is pressurized with flue gas (CO₂: 8-10 vol%; H₂O: 18-20 vol%; O₂: 2-3 vol%; N₂: 67-72 vol%) to an initial pressure of 448 kPa, and rotated on rollers at 38 RPM for 3 days to obtain mechanochemically carbonated clay. The clay precursor was used as received. The reaction was initiated at room temperature and no heating or cooling was applied. The ceramic bearings have an Al₂O₃ content of 92 wt.% such that they also served as catalyst. The properties of the clay precursor (B1) and the obtained mechanochemically carbonated clay (B2) are shown in the below table.

### Samples C

Mechanochemically carbonated clay was produced by inserting 10 kg of clay precursor (calcined clay, different origin from sample A or B) into a pressure cell with 100 kg of milling media (ceramic bearings of 25.4 mm size). The cell is pressurized with flue gas (CO₂: 8-10 vol%; H₂O: 18-20 vol%; O₂: 2-3 vol%; N₂: 67-72 vol%) to an initial pressure of 441 kPa, and rotated on rollers at 38 RPM for 2 days to obtain mechanochemically carbonated clay. The clay precursor was used as received. The reaction was initiated at room temperature and no heating or cooling was applied. The ceramic bearings have an Al₂O₃ content of 92 wt.% such that they also served as catalyst. A portion of the clay precursor was subjected to regular milling to serve as a comparative example. The properties of the milled clay precursor (C1) and the obtained mechanochemically carbonated clay (C2) are shown in the below table.

### Samples D

Mechanochemically carbonated clay was produced by inserting 5 kg of clay precursor (non-calcined clay, same origin from sample C) into a pressure cell with 100 kg of milling media (ceramic bearings of 25.4 mm size). The cell is pressurized with flue gas (CO₂: 8-10 vol%; H₂O: 18-20 vol%; O₂: 2-3 vol%; N₂: 67-72 vol%) to an initial pressure of 448 kPa, and rotated on rollers at 38 RPM for 2 days to obtain mechanochemically carbonated clay. The clay precursor was used as received. The reaction was initiated at room temperature and no heating or cooling was applied. The ceramic bearings have an Al₂O₃ content of 92 wt.% such that they also served as catalyst. A portion of the clay precursor was subjected to regular milling to serve as a comparative example. The properties of the milled clay precursor (D1) and the obtained mechanochemically carbonated clay (D2) are shown in the below table.

### Samples E

Mechanochemically carbonated clay was produced by inserting 1 kg of clay precursor (shale feedstock, non-calcined) which was pretreated by calcining (1000°C) and conventional milling into a pressure cell with 17.5 kg of milling media (ceramic bearings of 10 mm size). The cell is pressurized with flue gas (CO₂: 8-10 vol%; H₂O: 18-20 vol%; O₂: 2-3 vol%; N₂: 67-72 vol%) to an initial pressure of 441 kPa, and rotated on rollers at 38 RPM for 2 days to obtain mechanochemically carbonated clay. The reaction was initiated at room temperature and no heating or cooling was applied. The ceramic bearings have an Al₂O₃ content of 92 wt.% such that they also served as catalyst. The properties of the milled and calcined clay precursor (E1) and the obtained mechanochemically carbonated clay (E2) are shown in the below table.

| **Sample** | **Particle Size Distribution** | | | **DLS surface area (m²/g)** | **Total Carbon (wt.%)** | **CO₂ content (wt.%)** | **% Water Demand** | **SAI 7-day, %** | **SAI 28-day, %** |
|---|---|---|---|---|---|---|---|---|---|
| | **D10 (µm)** | **D50 (µm)** | **D90 (µm)** | | | | | | |
| A1 | 1.2 | 6.2 | 26.6 7 | 0.706 | 1.17 | - | - | - | |
| A2 | 0.9 | 4.4 | 21.2 | 0.918 | 2.22 | - | 94.6 | 113.7 | 106.5 |
| B1 | 17.7 | 124.4 | 252. 1 | 0.080 | - | 0.97 | 100 | 74.5 | 86.1 |
| B2 | 0.9 | 3.7 | 19.2 | 0.973 | - | 1.94 | 89.5 | 141.7 | 131.1 |
| C1 | 1.4 | 140 | 75.0 | - | - | - | - | 91 | 99 |
| C2 | 1.3 | 13.8 | 66.2 | 0.550 | - | 0.87 | 97.3 | 127.6 | 131.1 |
| D1 | 1.2 | 7.0 | 90 | - | - | - | - | 79 | 77 |
| D2 | 1.0 | 4.6 | 24.9 | - | - | 1.40 | 97.5 | 126 | 134 |
| E1 | 1.3 | 7.4 | 32.9 | 0.664 | - | - | - | 96 | 104 |
| E2 | 1.0 | 5.3 | 28.7 | 0.833 | - | - | 93.0 | 133.4 | 115.8 |

For sample A, the BET surface area of the precursor and the carbonated material was determined as 6.6 m²/g and 24.9 m²/g respectively, showing that a large part of the surface area increase effected by the method of the present invention can be attributed to changes in the pore surface area.

**As** can be observed from the Strength Activity Index (SAI) measurements and the water demand measurements, the mechanochemically carbonated clay of the present invention provides an unexpectedly reduced water demand and increased strength compared to the untreated clay, compared to milled clay, compared to calcined clay as well as compared to the Portland cement control.

## Claims

1. A mechanochemically carbonated clay which has a specific surface area of less than 50 m²/g and having a strength activity index, SAI, at day 7 determined according to ASTM C311/C311M-22 which is at least 105% and having a strength activity index, SAI, at day 28 determined according to ASTM C311/C311M-22 which is at least 110%.

2. The mechanochemically carbonated clay of claim 1 having one, two, or three, preferably all three, of the following characteristics:
• a D10 within the range of 0.005-3 µm, preferably 0.01-2 µm, most preferably 0.1-1.4 µm;
• a D50 within the range of 0.1-30 µm, preferably 0.5-15 µm, most preferably 1-10 µm;
• a D90 within the range of 0.5-100 µm, preferably 1-80 µm, most preferably 5-70 µm.

3. The mechanochemically carbonated clay of any preceding claim having a CO₂ content of more than 0.8 wt.% by total weight of the mechanochemically carbonated clay, preferably more than 1 wt.% by total weight of the mechanochemically carbonated clay, wherein the CO₂ content is determined as the mass loss above 450°C measured by TGA employing a temperature trajectory wherein the temperature was increased from room temperature to 800°C at a rate of 10 °C/min.

4. The mechanochemically carbonated clay of any preceding claim having a total carbon content of at least 0.75 wt.%, preferably at least 0.85 wt.%, more preferably at least 0.9 wt.%.

5. The mechanochemically carbonated clay of any preceding claim having a strength activity index, SAI, at day 7 determined according to ASTM C311/C311M-22 which is at least 125% and having a strength activity index, SAI, at day 28 determined according to ASTM C311/C311M-22 which is at least 125%.

6. The mechanochemically carbonated clay of any preceding claim which has a specific surface area of 0.3-50 m²/g, preferably 0.3-30 m²/g.

7. The mechanochemically carbonated clay of any one of claims 1-5 which has a specific surface area of less than 5 m²/g , preferably less than 3 m²/g.

8. The mechanochemically carbonated clay of any preceding claim which has a water demand of less than 97%.

9. A composition comprising the mechanochemically carbonated clay as defined in any of claims 1-8 and a further material, wherein the further material is preferably selected from the group consisting of asphalt, cement, geopolymers, polymers, and combinations thereof, preferably cement, more preferably Portland cement.

10. The composition of claim 9 comprising the mechanochemically carbonated clay and the further material in a weight ratio between 1:9 and 2:1.

11. The composition of claim 9 comprising less than 5 wt.%, by total weight of the composition, of water.

12. The composition of claim 9 comprising 5-70 wt.%, by total weight of the composition, of the mechanochemically carbonated clay, preferably 10-60 wt.%.

## Patentansprüche

1. Mechanochemisch karbonisierter Ton, der eine spezifische Oberfläche von weniger als 50 m2/g aufweist und einen Festigkeitsaktivitätsindex (SAI) an Tag 7, bestimmt nach ASTM C311/C311M-22, der mindestens 105 % beträgt, und einen Festigkeitsaktivitätsindex (SAI) an Tag 28, bestimmt nach ASTM C311/C311M-22, der mindestens 110 % beträgt.

2. Mechanochemisch karbonisierter Ton nach Anspruch 1, der eine, zwei oder drei, vorzugsweise alle drei, der folgenden Eigenschaften aufweist:
• einen D10 im Bereich von 0,005-3 µm, vorzugsweise 0,01-2 µm, am meisten bevorzugt 0,1-1,4 µm;
• einen D50 im Bereich von 0,1-30 µm, vorzugsweise 0,5-15 µm, am meisten bevorzugt 1-10 µm;
• einen D90 im Bereich von 0,5-100 µm, vorzugsweise 1-80 µm, am meisten bevorzugt 5-70 µm.

3. Mechanochemisch karbonisierter Ton nach einem der vorhergehenden Ansprüche mit einem CO2-Gehalt von mehr als 0,8 Gew.-% bezogen auf das Gesamtgewicht des mechanochemisch karbonisierten Tons, vorzugsweise mehr als 1 Gew.-% bezogen auf das Gesamtgewicht des mechanochemisch karbonisierten Tons, wobei der CO₂-Gehalt als der Massenverlust oberhalb von 450°C bestimmt wird, der durch TGA unter Verwendung einer Temperaturkurve gemessen wird, wobei die Temperatur von Raumtemperatur auf 800°C mit einer Rate von 10 °C/min erhöht wird.

4. Mechanochemisch karbonisierter Ton nach einem der voranstehenden Ansprüche mit einem Gesamtkohlenstoffgehalt von mindestens 0,75 Gew.-%, vorzugsweise mindestens 0,85 Gew.-%, besonders bevorzugt mindestens 0,9 Gew.-%.

5. Mechanochemisch karbonisierter Ton nach einem der vorhergehenden Ansprüche mit einem Festigkeitsaktivitätsindex (SAI) an Tag 7, bestimmt nach ASTM C311/C311M-22, der mindestens 125 % beträgt, und mit einem Festigkeitsaktivitätsindex (SAI) an Tag 28, bestimmt nach ASTM C311/C311M-22, der mindestens 125 % beträgt.

6. Mechanochemisch karbonisierter Ton nach einem der vorhergehenden Ansprüche mit einer spezifischen Oberfläche von 0,3-50 m²/g, vorzugsweise 0,3-30 m²/g.

7. Mechanochemisch karbonisierter Ton nach einem der Ansprüche 1-5 mit einer spezifischen Oberfläche von weniger als 5 m²/g, vorzugsweise weniger als 3 m²/g.

8. Mechanochemisch karbonisierter Ton nach einem der voranstehenden Ansprüche mit einem Wasserbedarf von weniger als 97 %.

9. Zusammensetzung, umfassend den mechanochemisch karbonisierten Ton nach einem der Ansprüche 1-8 und ein weiteres Material, wobei das weitere Material vorzugsweise aus der Gruppe ausgewählt ist, die aus Asphalt, Zement, Geopolymeren, Polymeren und Kombinationen davon besteht, vorzugsweise Zement, besonders bevorzugt Portlandzement.

10. Zusammensetzung nach Anspruch 9, umfassend den mechanochemisch karbonisierten Ton und das weitere Material in einem Gewichtsverhältnis zwischen 1:9 und 2:1.

11. Zusammensetzung nach Anspruch 9, umfassend weniger als 5 Gew.-%, bezogen auf das Gesamtgewicht der Zusammensetzung, an Wasser.

12. Zusammensetzung nach Anspruch 9, umfassend 5-70 Gew.-%, bezogen auf das Gesamtgewicht der Zusammensetzung, des mechanochemisch karbonisierten Tons, vorzugsweise 10-60 Gew.-%.

## Revendications

1. Argile carbonatée mécano-chimiquement qui présente une surface spécifique inférieure à 50 m²/g et présentant un indice d'activité de résistance, SAI, au jour 7 déterminé selon la norme ASTM C311/C311M-22 qui est d'au moins 105 %, et présentant un indice d'activité de résistance, SAI, au jour 28 déterminé selon la norme ASTM C311/C311M -22 qui est d'au moins 110 %.

2. Argile carbonatée mécano-chimiquement selon la revendication 1, présentant une, deux ou trois des caractéristiques suivantes, de préférence les trois :
• un D10 dans la plage de 0,005 à 3 µm, de préférence de 0,01 à 2 µm, de la manière la plus préférée de 0,1 à 1,4 µm ;
• un D50 dans la plage de 0,1 à 30 µm, de préférence de 0,5 à 15 µm, de la manière la plus préférée de 1 à 10 µm ;
• un D90 dans la plage de 0,5 à 10 µm, de préférence de 1 à 80 µm, de la manière la plus préférée de 5 à 70 µm.

3. Argile carbonatée mécano-chimiquement selon l'une quelconque des revendications précédentes, présentant une teneur en CO₂ de plus de 0,8 % en poids, en poids total de l'argile carbonatée mécano-chimiquement, de préférence plus de 1 % en poids, en poids total de l'argile carbonatée mécano-chimiquement, dans laquelle la teneur en CO₂ est déterminée comme la perte de masse au-dessus de 450°C mesurée par TGA en utilisant une trajectoire de température, dans laquelle la température a été augmentée de la température ambiante à 800°C à une vitesse de 10°C/min.

4. Argile carbonatée mécano-chimiquement selon l'une quelconque des revendications précédentes, présentant une teneur totale en carbone d'au moins 0,75 % en poids, de préférence d'au moins 0,85 % en poids, de manière plus préférée d'au moins 0,9 % en poids.

5. Argile carbonatée mécano-chimiquement selon l'une quelconque des revendications précédentes, présentant un indice d'activité de résistance, SAI, au jour 7 déterminé selon la norme ASTM C311/C311M-22 qui est d'au moins 125 %, et présentant un indice d'activité de résistance, SAI, au jour 28 déterminé selon la norme ASTM C311/C311M-22 qui est d'au moins 125 %.

6. Argile carbonatée mécano-chimiquement selon l'une quelconque des revendications précédentes, qui présente une surface spécifique de 0,3 à 50 m²/g, de préférence de 0,3 à 30 m²/g.

7. Argile carbonatée mécano-chimiquement selon l'une quelconque des revendications 1 à 5, qui présente une surface spécifique de moins de 5 m²/g, de préférence de moins de 3 m²/g.

8. Argile carbonatée mécano-chimiquement selon l'une quelconque des revendications précédentes, qui présente une demande en eau de moins de 97 %.

9. Composition comprenant une argile carbonatée mécano-chimiquement selon l'une quelconque des revendications 1 à 8 et un matériau supplémentaire choisi dans le groupe comprenant asphalte, ciment, géopolymères, polymères, et des combinaisons de ceux-ci, de préférence du ciment, de manière plus préférée du ciment Portland.

10. Composition selon la revendication 9 comprenant l'argile carbonatée mécano-chimiquement et le matériau supplémentaire à un rapport pondéral compris entre 1:9 et 2:1.

11. Composition selon la revendication 9, comprenant moins de 5 % d'eau, en poids total de la composition.

12. Composition selon la revendication 9, comprenant de 5 à 70 % d'eau, en poids total de la composition, de l'argile carbonatée mécano-chimiquement, de préférence de 10 à 60% .
